# EUROPEAN PATENT SPECIFICATION

(11) **EP 3 676 997 B1**
(45) Date of publication and mention of the grant of the patent: **04.05.2022**
(21) Application number: 17761477.3
(22) Date of filing: 31.08.2017
(51) Int. Cl.: H04L 12/40, H04L 12/46

(54) **TRANSMITTING DATA BETWEEN A CONTROL DEVICE AND AN ELECTRICAL COMPONENT OF A VEHICLE**
DATENÜBERTRAGUNG ZWISCHEN EINER STEUERVORRICHTUNG UND EINEM ELEKTRISCHEN BAUTEIL EINES FAHRZEUGS
TRANSMISSION DE DONNÉES ENTRE UN DISPOSITIF DE COMMANDE ET UN COMPOSANT ÉLECTRIQUE D'UN VÉHICULE

(43) Date of publication of application: 08.07.2020
(73) Proprietor: HELLA GMBH & CO. KGAA, 59552 Lippstadt (DE)
(72) Inventor: SEIFFERT, Marc, 59557 Lippstadt (DE)
(74) Representative: Bals & Vogel Patentanwälte PartGmbB
(86) International application number: PCT/EP2017/071845
(87) International publication number: WO 2019/042552

(56) References cited:
- CN-A- 106 487 668
- US-A1- 2006 130 049
- US-A1- 2016 344 703

## Description

The present invention is related to a system for transmitting data between a control device and an electrical component of a vehicle. Furthermore, the invention is related to a method for transmitting data.

It is known to offer systems and methods for data transmission, as for example the well-known CAN bus system. Furthermore, it is known that analogue interfaces can be used to transmit data within a vehicle. For instance, sensor data can be transmitted through an analogue interface, particularly for transmission of position information or the like. The transmission path can for example lead from a sensor through a car wiring harness to an electronic control unit (ECU) of the vehicle.

However, analogue systems (interfaces or transmission systems) are less accurate and have a reduced functionality compared to digital systems. Digital systems, in contrast, have various drawbacks like high latency and/or high costs. Furthermore, digital systems with low latency or reduced complexity are often not suitable for longer distances, for example when binding together into a wiring harness (or cable harness) for an arrangement across a vehicle.

US 2006/0130049 A1 describes a device connecting subnets in a vehicle, which is configured according to the preamble of claim 1.

It is an object of the present invention to overcome aforesaid problems at least partially. Particularly, it is an object of the present invention to provide an easy and cost-efficient solution for data transmission, preferably over long distances within a vehicle, particularly preferably with extended functionality.

Aforesaid object is achieved by a system according to independent claim 1 and a method according to independent claim 6. Further features and details of the invention result from the subclaims, the description and the figures. Features and details discussed with respect to the inventive system are also correlated with the inventive method and the other way round.

Particularly, aforesaid object is achieved by a system for transmitting data between a control device, particularly an ECU, of a vehicle and an electrical component of the vehicle. Preferably, the vehicle is designed as a passenger vehicle and/or a fully electric or hybrid electric vehicle and/or the like.

The system comprises at least:
- a first transmission system for a first transmission of an information between a processor unit of the control device and an interface unit of the control device and/or vice versa, and
- a second transmission system for a second transmission of said information between the interface unit and the electrical component and/or vice versa,
wherein the first transmission system comprises at least one single-ended signaling line that is adapted to (electrically) connect the processor unit to the interface unit for performing the first transmission using single-ended signaling, and the second transmission system comprises at least one pair of differential signaling lines that is adapted to connect the interface unit to the electrical component for performing the second transmission using differential signaling. This has the advantage that an easy and less complex first transmission of the information can be used within the control device. Additionally, the second transmission of the information between the control device and the electrical component can be performed by differential signaling, which is more stable for longer distances than single-ended signaling.

According to the invention, the first transmission system is physically configured as a Serial Peripheral Interface bus (SPI), and/the second transmission system is physically configured as a Controller Area Network (CAN).However, the original transmission protocol of each system can be adapted or replaced by a customized transmission protocol. The transmission protocol is configured to operate both transmission systems and/or is adapted for both transmission systems. This has the advantage that a more stable but also technically less complex and/or less expensive transmission concept can be provided.

Particularly by using this combination of the first and second transmission system for transmission of the same information, the (physical) requirements can be met to provide a stable and safe transmission, particularly over long distances inside the vehicle, and at the same time, the complexity can be reduced by using (substantially) the same transmission information for both the first and second transmission system. In other words, the first transmission system determines the (less complex) "logical" transmission method and the second transmission systems determine the maximum length of the transmission path. For example, since the same information is transmitted via the first and second transmission system, the logical transmission method can be less complex compared to a more complex and expensive CAN transmission. However, the physically relevant part of the second transmission system can be more complex than the first transmission system. For instance, the driver and/or lines of a CAN bus are used for the second transmission system. For example, the driver, in particular the interface unit, can be used to convert the signal levels of the first to the second transmission system and/or vice versa. But the logical transmission of the information can be different from a CAN system, and be similar or equal to the first transmission system, as further detailed below.

It can be possible that the second transmission system is a technically more complex transmission system than the first transmission system. The first transmission system is physically configured as a SPI system. The second transmission is physically configured as a CAN system, for instance only the driver and/or lines and/or the physical layer of the CAN specification. Other parts of the second transmission system, for instance the transfer layer or the object layer or the logical transmission of the information, can depend on the first transmission system.

Particularly, the information transmitted through the first and second transmission system comprises the following parts:
- a payload, for instance sensor data and/or data for controlling the sensor and/or diagnostic data (for an error diagnosis),
- control information, for instance control data or control signals or a synchronization pulse.

In particular, the control information is the same (is not changed) when transmitting through the first and second transmission system. This has the advantage, that a less complex "logical transmission" method can be applied for both transmission systems, while the transmission distance can be increase because of using differential signaling.

Furthermore, the first and/or second transmission system can be configured as a real time transmission system and/or comprise of an error detection functionality.

According to the invention, the first transmission system is physically or fully configured as a Serial Peripheral Interface bus (SPI), and may be particularly adapted for using a customized transmission protocol. In other words, only parts of the SPI specification can be used and the original protocol can be replaced by the customized transmission protocol. This allows for an adaption of the transmission systems, for example to archive a transmission capability over long distances.

It is also according to the invention that the second transmission system is physically configured as a Controller Area Network (CAN), and preferably adapted for using a customized transmission protocol, wherein particularly preferably the second transmission system is configured for a logical transmission which depends on the first transmission system. For instance, the second transmission system can only use the physical parts of the CAN specification (like the physical layer) and the original protocol can be replaced by the customized transmission protocol. For instance, the customized transmission protocol and/or the logical transmission can be based on a SPI protocol and/or on the protocol used by the first transmission system. Therefore, the logical transmission of the second transmission system can depend on the first transmission system. This allows reducing the costs and efficiency of the transmission capability.

Particularly, the customized transmission protocol is defined by the data send by the control device and/or the processor unit and/or has synchronization functionality. Preferably, the synchronization functionality comprises a byte-by-byte synchronization and/or a data frame by data frame synchronization. The protocol functionality can, for example, be provided by a driver unit, for instance used in the control device and/or electrical component, for example configured as an integrated circuit or ASIC (application-specific integrated circuit) or the like.

Particularly, single-ended signaling (German: "Asymmetrische Signalubertragung") is a method of transmitting electrical signals over wires. For instance, one wire carries a varying voltage that represents the signal, while the other wire is connected to a reference voltage, usually ground. The main alternative to single-ended signaling is called differential signaling (German: "Symmetrische Signalubertragung"). Particularly, differential signaling is a method for electrically transmitting information using two complementary signals. The technique sends the same electrical signal as a differential pair of signals, preferably each in its own conductor. The pair of conductors can be for example wires (typically twisted together) or traces on a circuit board. Preferably, the receiving circuit responds to the electrical difference between the two signals, rather than the difference between a single wire and ground.

It is also conceivable that the electrical component is configured as a sensor of the vehicle, particularly a sensor for position detection of a rotor of a motor, especially electric motor or power steering motor, of the vehicle, wherein the control device is configured as a ECU for controlling the motor electrically so that the transmitted information is a control information and/or a sensor information, for example measurement and/or position data specific for the rotor. This allows for a reliable transmission of sensor relevant data.

Advantageously, the electrical component is a component of the vehicle and formed separately from the control device, particularly arranged spaced apart from the control device within the vehicle.

It can be provided that the interface unit is configured as a transceiver unit, particularly as a CAN transceiver unit or a transistor using a pull up resistor or the like. Especially, the interface unit can be provided on a printed circuit board of the control device. This can further reduce the costs.

It may also be provided that the interface unit is connected to the electrical component through a wiring harness of the vehicle. This allows an easy and cost-efficient laying of cables for the transmission over long distances within the vehicle. The single lines of the transmission systems can, for instance, be included in a cable or the like, which are bound together to form the wiring harness.

It can be provided that the differential signaling lines are configured to provide a transmission over a longer distance within the vehicle than the single-ended signaling line, and particularly have a length up to 10 m or up to 5 m or up to 1 m or in a range from 10 cm up to 10 m, preferably from 100 cm up to 5 m, particularly preferably from 1 m up to 3 m. Known transmission systems used for a digital transmission in vehicles are usually either very complex and expensive or do not allow for a long-distance transmission. Therefore, the combination of the first and second transmission system, wherein the second transmission system is used for a transmission over the abovementioned length, increases the effectivity, the usable distance and reduces the costs.

A further aspect of the present invention is a method for transmitting data between a control device and an electrical component of a vehicle, wherein (at least) a first and second transmission system is used for transmitting information. The inventive method comprises at least the following steps, which can be performed sequentially or in any order, wherein single steps can also be repeated:
- Transmitting an information from the electrical component to an interface unit of the control device, and/or vice versa, using differential signaling through the second transmission system,
- Transmitting said information from the interface unit to a (electronic) processor unit of the control device, and/or vice versa, using single-ended signaling through the first transmission system.

Furthermore, the first transmission system is physically configured as a Serial Peripheral Interface bus, and the second transmission system is physically configured as a Controller Area Network.

Particularly, an inventive method can be used to operate an inventive system. By carrying out the inventive method with the inventive system, the inventive method comes up with the same advantages which have been discussed in detail with respect to the inventive system.

According to another aspect of the invention, it is provided that the step of transmitting said information from the electrical component to the interface unit (and/or vice versa) comprises a substantially asynchronous transmission with only partial synchronization, particularly wherein a byte-by-byte or data-frame by data-frame synchronization is used, preferably by using a synchronization signal, particularly preferably a falling edge, initiated by the processor unit as a master unit. In other words, not a pure asynchronous transmission is used (a separate clock signal is not transmitted) but the transmitted information itself contains a synchronization signal. This allows to further decreases costs and complexity.

Furthermore, it is conceivable that a customized protocol is used, wherein for transmitting said information a bit signal created by the processor unit is directly transmitted to the electrical component through the interface unit and/or vice versa. Therefore the information (for example the bit or raw data) send on the first and second transmission system can be (substantially) identical, so as to decrease the complexity of the system.

In the following, preferred embodiments of the invention are described on the basis of supportive figures. Thereby, the features described in the claims and in the description can be each single or in every combination be essential for the invention. It is shown schematically in:
- Fig. 1: the inventive system,
- Fig. 2: a logical data level diagram related to the inventive system.

In the different figures same features always correspond to the same reference signs, therefore, generally the features are only described once.

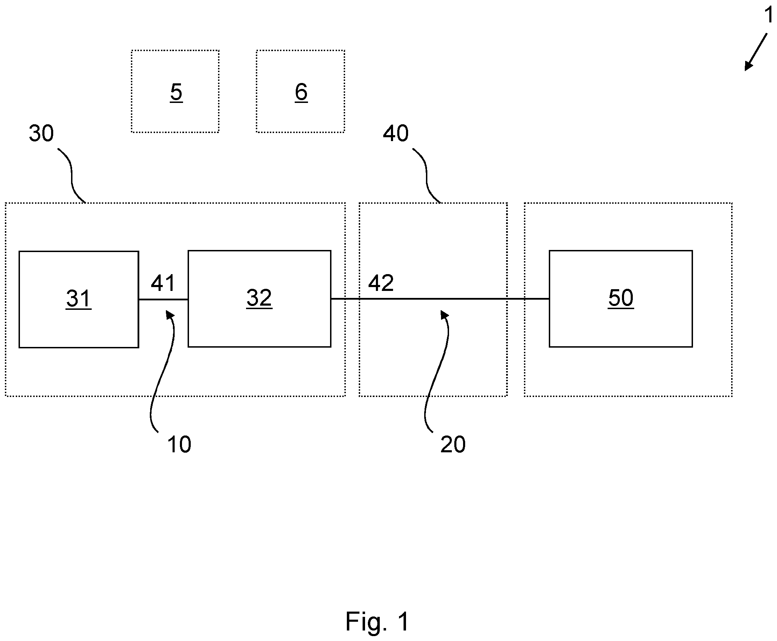

Figure 1 shows schematically parts of the inventive system 1. Additionally, a vehicle 5 and a motor 6 of the vehicle 5 are shown. A control device 30, for instance configured as ECU, is provided, which comprises at least one processor unit 31, for instance a ECU processor 31, and at least one interface unit 32, for instance a CAN transceiver integrated circuit 32. A first communication between the processor unit 31 and the interface unit 32 can be carried out by a first transmission system 10, which uses at least two single-ended signaling line 41. A second communication between the interface unit 32 and an electrical component 50, for instance a sensor, can be carried out using a second transmission system 20 with differential signaling lines 42. The differential signaling lines 42 can be configured as a pair of lines. Additionally, further lines of the second transmission system 20 can be provided (for instance a supply voltage and/or ground line). All lines of the second transmission system 20 can form a wiring harness 40 of the vehicle.

Advantageously, the first transmission system 10 uses at least two lines of a SPI interface. Preferably, a clock line is not used for the first and/or second transmission system 10, 20. Optionally, an additional line is provided for the first transmission system 10 for activation and/or deactivation of the interface unit 32, especially in the case when the first transmission system 10 is used as a bus system with a plurality of subscribers. The differential signaling lines 42 of the second transmission system 20 can, for example, be configured as a twisted two-wire line. The second transmission system 20 is physically identical to a CAN system. The signals of the first and/or second transmission system 20 are physically identical to a CAN signal.

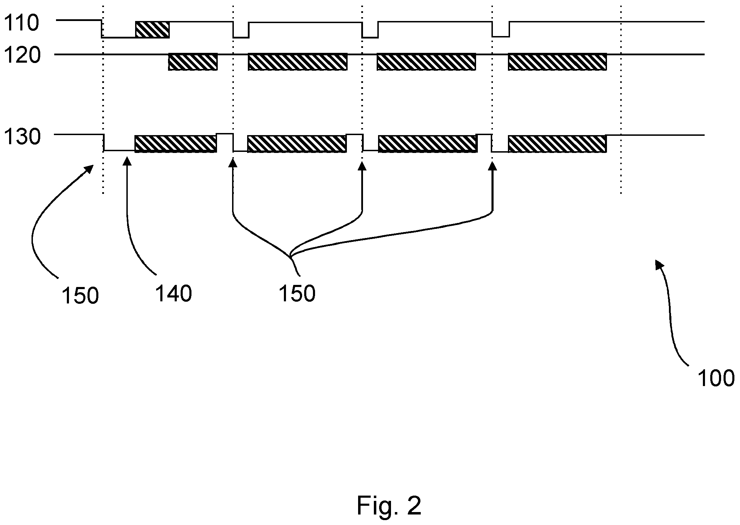

In figure 2, a logical data level diagram 100 is shown. Particularly, the logical data level diagram 100 provides the customized transmission protocol that is used by the first and second transmission system 10, 20. A master level 110 is shown, which is the signal send by the processor unit 31. Furthermore, a component or sensor level 120 is shown which is send by the electrical component 50. Additionally, a second transmission or CAN Bus level 130 is shown, which represents the signal on the differential signaling lines 42. The lines represent "high" and "low" signal, whereas filled areas represent a range where the processor unit 31 and/or the electrical component 50 can send arbitrary bits for the payload data. A long first sync 140 is used to indicate the start of a frame. The long first sync 140 is initiated by the processor unit 31 as a master unit. For synchronization, a synchronization pulse, for example a falling edge 150, is send by the processor unit 31. Therefore, a falling edge 150 represents a synchronization moment.

It is conceivable that for starting a data frame the synchronization pulse is extended for forming a long first sync 140. This can be detected by the electrical component 50 (for instance a sensor). After the positive detection, the electrical component 50 can at first read data transmitted from the control device 30 and then send its own data through the second transmission system 20 (both represented by filled areas in the diagram). While transmitting, at a distance of a certain number of data units (for example every eight bits) resynchronization edges are used to compensate for clock deviation between control device 30 and electrical component 50.

Another aspect can be that during communication the second transmission system 20 acts from in view of the control device 30 as a synchronous SPI interface. For example, four data bytes are outputted while using defined levels (for instance high = "1" and low = "0").

Furthermore, it can be possible that bytes can be transmitted within a data frame without gaps between each other. In this case, the electrical component 50 can use the transmitted information to recalibrate the clock. This allows reducing costs for the clock of the electrical component 50.

Furthermore, it is conceivable that the payload of the transmitted information is extended by time information for setting the signal latency. This allows for reducing jitter effects. Additionally, or alternatively, a previous data query can be used to initiate a signal sampling.

Furthermore, particularly, in the first byte of the information a special signal sequence can be used to set alternative data frame formats. For example, instead of transmitting four data bytes more than four data bytes can be used. Alternatively, or additionally, the system can be extended to a bus system with a plurality of subscribers.

Besides those already mentioned above, many modifications and variations of the above embodiments may be made without departing from the scope of the invention as defined by the appended claims.

### Reference list

- 1: System
- 5: vehicle
- 6: motor
- 10: first transmission system
- 20: second transmission system
- 30: control device, ECU
- 31: processor unit, ECU processor
- 32: interface unit, CAN transceiver IC
- 40: wiring harness
- 41: single-ended signaling line
- 42: differential signaling line
- 50: electrical component, sensor
- 100: logical data level diagram
- 110: master level, send by master "SPI Data Out"
- 120: sensor level, send by sensor "Sensor Data Out"
- 130: CAN Bus level, "SPI Data In"
- 140: long first sync, start of frame
- 150: falling edge, sync

## Claims

1. System (1) for transmitting data between a control device (30) and an electrical component (50) of a vehicle (5), comprising:
- a first transmission system (10) for a first transmission of an information between a processor unit (31) of the control device (30) and an interface unit (32) of the control device (30) and/or vice versa,
- a second transmission system (20) for a second transmission of said information between the interface unit (32) and the electrical component (50) and/or vice versa,
wherein the first transmission system (10) comprises at least one single-ended signaling line (41) that is adapted to connect the processor unit (31) to the interface unit (32) for performing the first transmission using single-ended signaling (41), and
the second transmission system (20) comprises at least one pair of differential signaling lines (42) that is adapted to connect the interface unit (32) to the electrical component (50) for performing the second transmission using differential signaling (42), wherein
the first transmission system (10) is physically configured as a Serial Peripheral Interface, SPI, bus, and
the second transmission system (20) is physically configured as a Controller Area Network, CAN,
**characterized in that** the first transmission system (10) and the second transmission system (20) are adapted for using the same transmission protocol.

2. System (1) according to claim 1,
**characterized in that,**
the electrical component (50) is configured as a sensor (50) of the vehicle (5), wherein the control device (30) is configured as an Electronic Control Unit, ECU, for controlling the motor (6) so that the transmitted information is a control information and/or a sensor information.

3. System (1) according to any of the preceding claims,
**characterized in that,**
the interface unit (32) is configured as a transceiver unit (32).

4. System (1) according to any of the preceding claims,
**characterized in that,**
the interface unit (32) is connected to the electrical component (50) through a wiring harness (40) of the vehicle (5).

5. System (1) according to any of the preceding claims,
**characterized in that,**
the differential signaling lines (42) are configured to provide a transmission over a longer distance within the vehicle than the single-ended signaling line (41).

6. Method for transmitting data between a control device (30) and an electrical component (50) of a vehicle (5), wherein a first and second transmission system (10, 20) are used for transmitting an information, wherein the first transmission system (10) is physically configured as a Serial Peripheral Interface, SPI, bus, and the second transmission system (20) is physically configured as a Controller Area Network, CAN, the method comprising the following steps:
- Transmitting the information from the electrical component (50) to an interface unit (32) of the control device (30), and/or vice versa, using differential signaling (42) through the second transmission system (20), and
- Transmitting said information from the interface unit (32) to a processor unit (31) of the control device (30), and/or vice versa, using single-ended signaling (41) through the first transmission system (10),
**characterized in that** the first transmission system (10) and the second transmission system (20) use the same transmission protocol.

7. Method according to claim 6,
**characterized in that,**
the step of transmitting said information from the electrical component (50) to the interface unit (32) comprises an asynchronous transmission with only partial synchronization, which is initiated by the processor unit (31) as a master unit.

8. Method according to claim 6 or 7,
**characterized in that,**
a customized protocol is used, wherein for transmitting said information a bit signal created by the processor unit (31) is directly transmitted to the electrical component (50) through the interface unit (32) and/or vice versa.

## Patentansprüche

1. System (1) zur Übertragung von Daten zwischen einer Steuervorrichtung (30) und einem elektrischen Bauteil (50) eines Fahrzeugs (5), umfassend:
- ein erstes Übertragungssystem (10) für eine erste Übertragung einer Information zwischen einer Prozessoreinheit (31) der Steuervorrichtung (30) und einer Schnittstelleneinheit (32) der Steuervorrichtung (30) und/oder vice versa,
- ein zweites Übertragungssystem (20) für eine zweite Übertragung der Informationen zwischen der Schnittstelleneinheit (32) und dem elektrischen Bauteil (50) und/oder vice versa,
wobei das erste Übertragungssystem (10) mindestens eine unsymmetrische Signalisierungsleitung (41) umfasst, die geeignet ist, die Prozessoreinheit (31) mit der Schnittstelleneinheit (32) zu verbinden, um die erste Übertragung unter Verwendung einer unsymmetrischen Signalisierung (41) durchzuführen, und
das zweite Übertragungssystem (20) mindestens ein Paar von Differenzsignalleitungen (42) umfasst, das dazu geeignet ist, die Schnittstelleneinheit (32) mit der elektrischen Komponente (50) zu verbinden, um die zweite Übertragung unter Verwendung von Differenzsignalen (42) durchzuführen, wobei
das erste Übertragungssystem (10) physisch als serielle Peripherieschnittstelle, SPI, konfiguriert ist und
das zweite Übertragungssystem (20) physisch als Controller Area Network, CAN, konfiguriert ist,
**dadurch gekennzeichnet, dass** das erste Übertragungssystem (10) und das zweite Übertragungssystem (20) für die Verwendung desselben Übertragungsprotokolls ausgelegt sind.

2. System (1) nach Anspruch 1,
**dadurch gekennzeichnet,**
**dass** das elektrische Bauteil (50) als Sensor (50) des Fahrzeugs (5) ausgebildet ist, wobei das Steuervorrichtung (30) als Electronic Control Unit, ECU, zur Steuerung des Motors (6) ausgebildet ist, so dass die übertragene Information eine Steuerinformation und/oder eine Sensorinformation ist.

3. System (1) nach einem der vorhergehenden Ansprüche,
**dadurch gekennzeichnet,**
**dass** die Schnittstelleneinheit (32) als Transceiver-Einheit (32) konfiguriert ist.

4. System (1) nach einem der vorhergehenden Ansprüche,
**dadurch gekennzeichnet,**
**dass** die Schnittstelleneinheit (32) über einen Kabelbaum (40) des Fahrzeugs (5) mit dem elektrischen Bauteil (50) verbunden ist.

5. System (1) nach einem der vorhergehenden Ansprüche,
**dadurch gekennzeichnet,**
**dass** die Differenzsignalleitungen (42) so konfiguriert sind, dass sie eine Übertragung über eine längere Strecke innerhalb des Fahrzeugs ermöglichen als die unsymmetrische Signalleitung (41).

6. Verfahren zur Übertragung von Daten zwischen einer Steuervorrichtung (30) und einer elektrischen Komponente (50) eines Fahrzeugs (5), wobei ein erstes und ein zweites Übertragungssystem (10, 20) zur Übertragung einer Information verwendet werden, wobei das erste Übertragungssystem (10) physisch als Serial Peripheral Interface, SPI, Bus und das zweite Übertragungssystem (20) physisch als Controller Area Network, CAN, ausgebildet ist,
wobei das Verfahren die folgenden Schritte umfasst:
- Übertragen der Information von der elektrischen Komponente (50) zu einer Schnittstelleneinheit (32) der Steuervorrichtung (30) und/oder umgekehrt unter Verwendung einer Differenzsignalisierung (42) über das zweite Übertragungssystem (20), und
- Übertragen der Informationen von der Schnittstelleneinheit (32) zu einer Prozessoreinheit (31) der Steuervorrichtung (30) und/oder umgekehrt unter Verwendung einer unsymmetrischen Signalisierung (41) über das erste Übertragungssystem (10),
**dadurch gekennzeichnet, dass** das erste Übertragungssystem (10) und das zweite Übertragungssystem (20) das gleiche Übertragungsprotokoll verwenden.

7. Verfahren nach Anspruch 6,
**dadurch gekennzeichnet,**
**dass** der Schritt der Übertragung der Informationen von der elektrischen Komponente (50) an die Schnittstelleneinheit (32) eine asynchrone Übertragung mit nur teilweiser Synchronisation umfasst, die von der Prozessoreinheit (31) als Master-Einheit initiiert wird.

8. Verfahren nach Anspruch 6 oder 7,
**dadurch gekennzeichnet,**
**dass** ein kundenspezifisches Protokoll verwendet wird, wobei zur Übertragung der Informationen ein von der Prozessoreinheit (31) erzeugtes Bitsignal über die Schnittstelleneinheit (32) direkt an das elektrische Bauteil (50) und/oder umgekehrt übertragen wird.

## Revendications

1. Système (1) pour transmettre des données entre un dispositif de commande (30) et un composant électrique (50) d'un véhicule (5), comprenant :
- un premier système de transmission (10) pour une première transmission d'une information entre une unité de processeur (31) du dispositif de commande (30) et une unité d'interface (32) du dispositif de commande (30) et/ou vice versa,
- un deuxième système de transmission (20) pour une deuxième transmission desdites informations entre l'unité d'interface (32) et le composant électrique (50) et/ou vice versa,
dans lequel le premier système de transmission (10) comprend au moins une ligne de signalisation unilatérale (41) qui est adaptée pour connecter l'unité de processeur (31) à l'unité d'interface (32) pour effectuer la première transmission en utilisant la signalisation unilatérale (41), et
le deuxième système de transmission (20) comprend au moins une paire de lignes de signalisation différentielle (42) qui est adaptée pour connecter l'unité d'interface (32) au composant électrique (50) pour effectuer la deuxième transmission en utilisant la signalisation différentielle (42), dans laquelle
le premier système de transmission (10) est physiquement configuré comme un bus SPI (Serial Peripheral Interface), et
le deuxième système de transmission (20) est physiquement configuré comme un réseau de contrôleur, CAN,
**caractérisé en ce que** le premier système de transmission (10) et le second système de transmission (20) sont adaptés pour utiliser le même protocole de transmission.

2. Système (1) selon la revendication 1,
**caractérisé en ce que,**
le composant électrique (50) est configuré comme un capteur (50) du véhicule (5), dans lequel le dispositif de commande (30) est configuré comme une unité de commande électronique, ECU, pour commander le moteur (6) de sorte que l'information transmise est une information de commande et/ou une information de capteur.

3. Système (1) selon l'une quelconque des revendications précédentes,
**caractérisé en ce que,**
l'unité d'interface (32) est configurée comme une unité d'émission-réception (32).

4. Système (1) selon l'une quelconque des revendications précédentes,
**caractérisé en ce que,**
l'unité d'interface (32) est connectée au composant électrique (50) par l'intermédiaire d'un faisceau de câbles (40) du véhicule (5).

5. Système (1) selon l'une quelconque des revendications précédentes,
**caractérisé en ce que,**
les lignes de signalisation différentielles (42) sont configurées pour fournir une transmission sur une distance plus longue à l'intérieur du véhicule que la ligne de signalisation à extrémité unique (41).

6. Procédé de transmission de données entre un dispositif de commande (30) et un composant électrique (50) d'un véhicule (5), dans lequel un premier et un deuxième système de transmission (10, 20) sont utilisés pour transmettre une information, dans lequel le premier système de transmission (10) est configuré physiquement comme un bus d'interface périphérique série, SPI, et le deuxième système de transmission (20) est configuré physiquement comme un Controller Area Network, CAN,
le procédé comprenant les étapes suivantes :
- Transmettre les informations du composant électrique (50) à une unité d'interface (32) du dispositif de commande (30), et/ou vice versa, en utilisant une signalisation différentielle (42) par l'intermédiaire du second système de transmission (20), et
- Transmettre lesdites informations de l'unité d'interface (32) à une unité de processeur (31) du dispositif de commande (30), et/ou vice versa, en utilisant une signalisation unique (41) par l'intermédiaire du premier système de transmission (10),
**caractérisé en ce que** le premier système de transmission (10) et le second système de transmission (20) utilisent le même protocole de transmission.

7. Procédé selon la revendication 6,
**caractérisé en ce que,**
l'étape de transmission desdites informations du composant électrique (50) à l'unité d'interface (32) comprend une transmission asynchrone avec seulement une synchronisation partielle, qui est initiée par l'unité de processeur (31) en tant qu'unité maître.

8. Procédé selon la revendication 6 ou 7,
**caractérisé en ce que,**
un protocole personnalisé est utilisé, dans lequel, pour transmettre lesdites informations, un signal binaire créé par l'unité de traitement (31) est directement transmis au composant électrique (50) par l'intermédiaire de l'unité d'interface (32) et/ou vice versa.
